# DEMANDE DE BREVET EUROPEEN

(11) **EP 0 706 921 A1**
(43) Date de publication de la demande: **17.04.1996**
(21) Numéro de dépôt: 95402297.6
(22) Date de dépôt: 13.10.1995
(51) Int. Cl.: B60R 25/04

(54) **Nouveau dispositif de contrôle d'accès pour véhicule**

(30) Priorité: 14.10.1994 FR 9412284
(71) Demandeur: Martins, Manuel, F-93190 Livry Gargan (FR)
(72) Inventeur: Martins, Manuel, F-93190 Livry Gargan (FR)
(74) Mandataire: Burtin, Jean-François

(57) **Abrégé**

La présente invention se rapporte au domaine de l'automobile.

Elle a pour objet, un système d'antenne (8) destiné à être placé autour du dispositif assurant le contact du moteur et la libération de la direction du véhicule (3), et permettant la lecture d'un microprocesseur (1) placé dans la clef de contact (2).

Utilisation pour un dispositif de sécurité.

## Description

La présente invention a pour objet un nouveau dispositif de sécurité permettant le contrôle d'accès et, en particulier, pour l'automobile.

Elle a plus particulièrement pour objet, une antenne pour système de lecture par radio fréquence (RF) sans contact, destinée à tous les systèmes d'accès.

Il existe, en effet, plusieurs systèmes de contrôle d'accès sans contact direct comme le transpondeur RF dont l'antenne est placée à un endroit précis mais pas toujours pratique, par exemple, derrière le tableau de bord d'un véhicule automobile et sans aucune exactitude selon le mode de présentation du badge.

Le demandeur a donc trouvé et c'est ce qui constitue l'essence de l'invention, un système d'antenne destiné à être placé autour du dispositif assurant le contact du moteur et la libération de la direction et permettant la lecture d'un microprocesseur (puce) placé dans la clef de contact.

Cette façon de procéder rend la recherche de l'antenne très facile, puisqu'il suffit d'introduire la clef de contact dans le dispositif de blocage de la colonne de direction, par exemple, pour que grâce à l'antenne placée sur ce dispositif, la lecture du microprocesseur, intégré dans la clef, soit effectuée sans délai et sans difficulté.

L'antenne, qui a une forme particulière, se place directement sur le corps du dispositif de blocage de la colonne de direction. Elle est fixée à l'aide d'une ou plusieurs vis pointeau, une fois que la position définitive a été trouvée. Une gorge est prévue dans cette antenne pour recevoir le fil électrique servant d'émetteur/récepteur.

En outre, un système électronique a été développé pour le bon fonctionnement de l'ensemble.

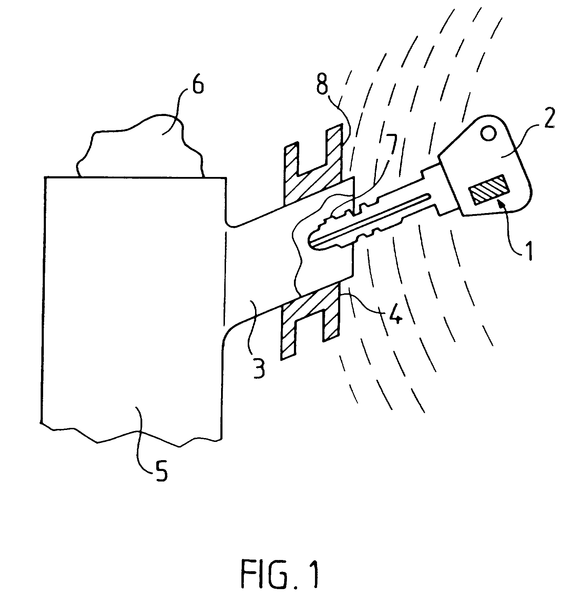

Dans un mode d'exécution particulier de l'invention, représenté à la figure 1, on a figuré de profil la colonne de direction du véhicule (5) surmontée de l'axe du volant (6) et le dispositif de verrouillage de la colonne de direction (3) faisant contact La clef de contact (2), portant à sa partie supérieure, le microprocesseur (1), est introduite dans l'orifice (7) du dispositif de verrouillage (3). L'antenne radio (8) est disposée autour et derrière le dispositif de verrouillage (3).

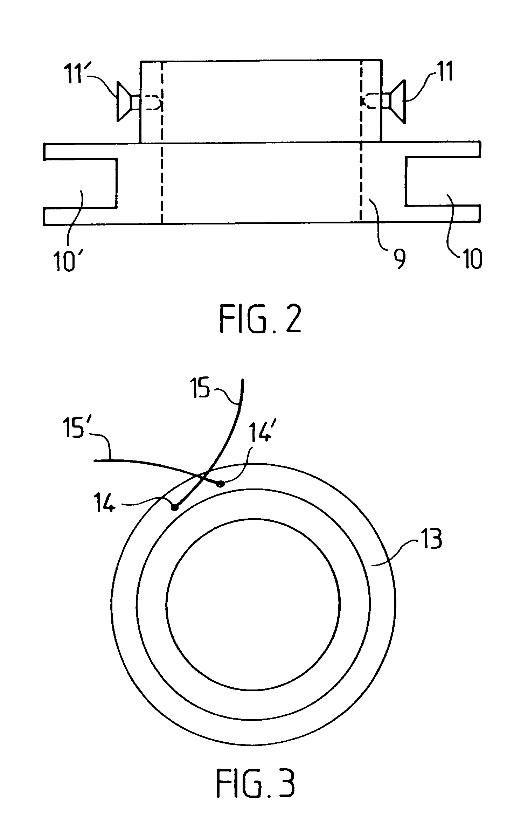

La figure 2 montre, en coupe, l'antenne radio (8) formée de deux corps, l'un en avant (9) présentant symétriquement en haut et en bas un évidement (10) et (10') et un corps arrière fixé à cheval sur le boîtage du dispositif de verrouillage (3) par deux vis pointeau (11) et (1l'), qui le maintiennent en position.

L'antenne radio (8) présente, de préférence, une forme circulaire représentée à la figure 3 possédant une gorge (12) à l'intérieur de laquelle, un fil de cuivre est bobiné. Le rebord supérieur (13) de la gorge présente deux petits orifices (14) et (14') par lesquels les deux extrémités (15) et (15') du fil de cuivre, émergent. Une des extrémités est enroulée sur le rebord supérieur de la gorge et forme un noeud de façon à ce que sa liaison avec l'antenne soit permanente. L'autre extrémité du fil sort librement de l'autre orifice. Les deux extrémités sont reliées par une soudure à une plaque métallique.

La partie arrière est formée d'un cercle de section plus faible destiné à s'emboîter sur la colonne de direction d'une façon durable.

L'introduction de la clef de contact dans l'orifice du dispositif de verrouillage assure la fermeture du circuit de sorte que les informations contenues dans le microprocesseur peuvent être lues par le circuit. Cet ensemble permet la transmission des informations au moteur et contrôle la mise en route de celui-ci.

En conséquence, sans la clef (2), comportant le microprocesseur (1), il est impossible de débloquer la colonne de direction et d'assurer l'allumage du moteur.

Il est compréhensible que l'antenne peut présenter d'autres formes que celles décrites qui ne constituent qu'une illustration de l'invention sans pour cela sortir du cadre de l'invention.

## Revendications

1. Dispositif de contrôle d'accès pour véhicule caractérisé en ce qu'il comprend un système d'antenne destiné à être placé autour du dispositif assurant le contrôle du moteur et la libération de la direction, permettant la lecture d'un microprocesseur placé dans la clef de contact du véhicule.

2. Dispositif selon la revendication 1° dans lequel l'antenne se place directement sur le dispositif de verrouillage de la colonne de direction.

3. Dispositif selon la revendication 1° et la revendication 2° dans lequel l'antenne est formée de deux corps l'un en avant de la colonne de direction et l'autre en arrière, à cheval sur le boîtage du dispositif de verrouillage.

4. Dispositif selon l'une des revendications 1 à 3° dans lequel l'antenne présente dans le corps avant, un évidement en haut et en bas de celui-ci.

5. Dispositif selon l'une des revendications 1 à 4° dans lequel l'antenne radio présente une forme circulaire possédant une gorge à l'intérieur de laquelle un fil de cuivre est bobiné et émerge par deux petits orifices disposés sur le rebord supérieur de la gorge.

6. Dispositif selon l'une des revendications 1 à 5° formé d'une antenne radio de forme circulaire disposée dans le boîtier du dispositif de verrouillage de la direction et d'une clef de contact disposée pour être introduite dans l'orifice du dispositif de verrouillage et comportant un microprocesseur contenant les instructions aptes à être lues par l'antenne radio.
